# EUROPÄISCHE PATENTSCHRIFT

(11) **EP 0 652 126 B1**
(45) Veröffentlichungstag und Bekanntmachung des Hinweises auf die Patenterteilung: **02.01.1997**
(21) Anmeldenummer: 94112324.2
(22) Anmeldetag: 06.08.1994
(51) Int. Cl.: B60J 3/02

(54) **Sonnenblende für Fahrzeuge sowie Verfahren zum Herstellen einer solchen**
Sun visor for vehicles and method for it fabrication
Pare-soleil pour véhicules et procédé pour sa fabrication

(30) Priorität: 08.11.1993 DE 4338019
(43) Veröffentlichungstag der Anmeldung: 10.05.1995
(73) Patentinhaber: BECKER GROUP EUROPE GmbH, 42285 Wuppertal (DE)
(72) Erfinder: Viertel, Lothar, D-66802 Altforweiler (DE); Welter, Patrick, F-57730 La Chambre (FR)

(56) Entgegenhaltungen:
- EP-A- 0 525 452
- DE-A- 3 909 687
- DE-C- 4 023 243
- FR-A- 2 483 858

## Beschreibung

Die Erfindung bezieht sich auf eine Sonnenblende für Fahrzeuge mit einem als etwa rechteckige Platte ausgebildeten Sonnenblendenkörper aus dunkelfarbenen, wie schwarzen Polypropylenpartikelschaumstoff und mit einer Vertiefung in einer Hauptfläche des Sonnenblendenkörpers zur Aufnahme eines Reflektors und einer darüber angeordneten Spiegelbaugruppe nebst Beleuchtungseinrichtung. Die Erfindung bezieht sich weiterhin auf ein Verfahren zum Herstellen einer solchen Sonnenblende.

Sonnenblenden für Fahrzeuge mit Sonnenblendenkörper aus dunkelfarbenen Polypropylenpartikelschaumstoff sind seit geraumer Zeit, insbesondere durch offenkundige Benutzungshandlungen bekannt. Zu diesen bekannten Sonnenblenden gehören auch solche, die mit einer Spiegelbaueinheit und einer elektrischen Beleuchtungseinrichtung ausgestattet sind. Bei diesen bekannten Sonnenblenden ist ganz allgemein zu beanstanden, daß sie aus einer Vielzahl von Einzelteilen zusammengesetzt sind, was die Herstellung erschwert und verteuert. Siche zum Beispiel DE-C-4 023 243 und EP-A-0 525 452

Die Aufgabe der vorliegenden Erfindung besteht darin, eine Sonnenblende der eingangs genannten Art zu vereinfachen und zu verbilligen sowie ein Verfahren zum Herstellen einer solchen Sonnenblende aufzuzeigen.

Gegenständlich wird diese Aufgabe erfindungsgemäß dadurch gelöst, daß der Reflektor aus einem thermisch verdichteten, hellfarbenen, vorzugsweise weißen Polypropylenpartikelschaumkörper gebildet und mit dem Sonnenblendenkörper innerhalb der Vertiefung verpreßt ist.

Durch die unmittelbare Verbindung des Reflektors mit dem Sonnenblendenkörper durch Verpressen wird eine bisher als erforderlich angesehene Wanne, die im Sonnenblendenkörper festgelegt und mit einem herkömmlichen als Kunststoff-Spritzgußteil oder Blechkörper ausgebildeten Reflektor bestückt werden mußte, eingespart. Da sowohl der Sonnenblendenkörper als auch der Reflektor nunmehr aus Polypropylen bestehen, ergeben sich auch keine Recyclingprobleme mehr. Der hellfarbene, vorzugsweise weiße Reflektor sichert eine optimale Lichtausbeute, während der dunkelfarbene, wie schwarze Sonnenblendenkörper einem Lichtaustritt auf der Sonnenblendenrückseite entgegenwirkt.

Eine Ausgestaltung der Erfindung sieht vor, daß der Reflektor mit dem Sonnenblendenkörper innerhalb der Vertiefung verpreßt und verschweißt ist, um auf diese Weise eine unlösbare Verbindung zu schaffen.

Eine weitere Ausgestaltung der Erfindung kann darin bestehen, daß der Reflektor vorderseitig angeformte Zapfen oder Dome zur Halterung einer mit entsprechenden Öffnungen versehenen Leiterplatte, die mit Beleuchtungseinrichtungs-Elementen, wie Kontaktbändern, Mikroschalter und Soffitten bestückt ist, aufweist. Damit lassen sich die wesentlichen Elemente der Beleuchtungseinrichtung schnell und einfach unmittelbar am Reflektor anbringen.

Es kann ferner vorgesehen sein, daß der Reflektor mit Öffnungen zum Durchlaß von an der Spiegelbaugruppe sitzenden Befestigungszapfen, die in den Sonnenblendenkörper eingreifen, ausgebildet ist, wobei die den Reflektor und die Leiterplatte übergreifende Spiegelbaugruppe einen sich auf den Rand der Vertiefung abstützenden Rahmen aufweist, der einen Spiegel, Leuchtfenster und ggf. eine Abdeckklappe zum Abdecken des Spiegels trägt. Dabei ist es weiterhin von Vorteil, daß die zur Spiegelbaugruppe gehörenden Befestigungszapfen mit dem Sonnenblendenkörper verschweißt sind.

Das erfindungsgemäße Verfahren zeichnet sich dadurch aus, daß in eine Schäumform dunkelfarbene Polypropylenpartikel eingegeben und zu einem mit einer Vertiefung in einer Hauptfläche ausgebildeten Sonnenblendenkörper geformt werden, daß in eine zweite Schäumform hellfarbene Polypropylenpartikel eingegeben und zu einem in die Vertiefung des Sonnenblendenkörpers passenden Formkörper geformt werden, daß der hellfarbene Formkörper in die Vertiefung des Sonnenblendenkörpers eingesetzt wird und daß hiernach der hellfarbene Formkörper durch gleichzeitige Anwendung von Wärme und Druck gegen den Boden der Vertiefung gepreßt, dabei verdichtet und zu einem Reflektor umgeformt wird. Vorzugsweise wird dabei so verfahren, daß der hellfarbene Formkörper mittels eines aufheizbaren Prägewerkzeugs (Stempel) verdichtet und umgeformt wird.

Gemäß einer Weiterbildung des erfindungsgemäßen Verfahrens kann vorgesehen sein, daß auch der Sonnenblendenkörper durch gleichzeitige Anwendung von Wärme und Druck zumindest bereichsweise verdichtet und umgeformt wird. Auf diese Weise läßt sich beispielsweise im Randbereich der Vertiefung des Sonnenblendenkörpers eine stufenförmige Absetzung zur formschlüssigen Aufnahme des Rahmens der Spiegelbaugruppe ausbilden.

Schließlich kann eine Weiterbildung der Erfindung noch darin bestehen, daß die Oberflächenschicht des Sonnenblendenkörpers plastifiziert und prägebearbeitet wird. Hierdurch kann eine Umhüllung des Sonnenblendenkörpers mit Umhüllungsmaterial entfallen.

Ein Ausführungsbeispiel der Erfindung wird nachfolgend anhand der Zeichnungen näher erläutert. Es zeigen:
- Fig. 1: einen Sonnenblendenkörper mit Reflektorrohling in einer perspektivischen Explosivdarstellung,
- Fig. 2: den Sonnenblendenkörper nach Fig. 1 im Schnitt mit dem in die Vertiefung desselben eingefügten Reflektorrohlings,
- Fig. 3: den Sonnenblendenkörper im Schnitt nach thermischer Verdichtung des Sonnenblendenkörpers und Reflektors,
- Fig. 4: eine Draufsicht auf den Sonnenblendenkörper mit Beleuchtungseinrichtung,
- Fig. 5: einen Schnitt folgend der Linie A - A in Fig. 4 und
- Fig. 6: einen Schnitt folgend der Linie D - D in Fig. 4.

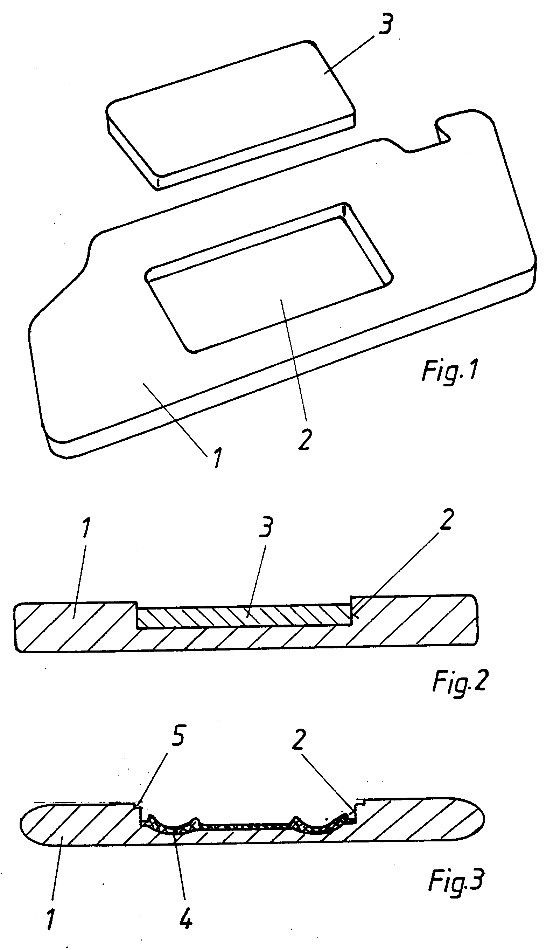

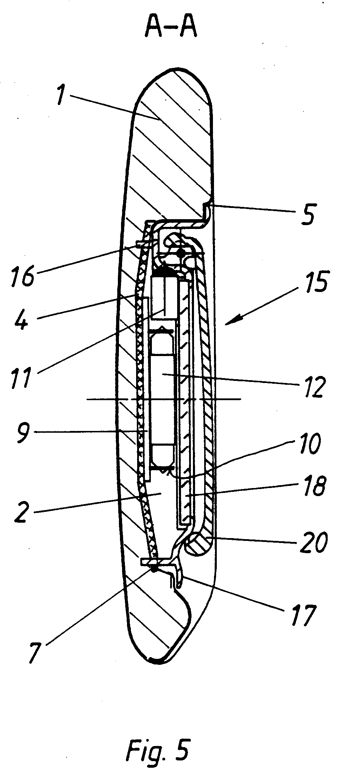

Der Sonnenblendenkörper 1, der aus einem schwarzen Polypropylenpartikelschaumstoff besteht, weist in einer seiner Hauptflächen eine Vertiefung 2 auf. In diese Vertiefung 2 wird zunächst ein aus einem weißen Polypropylenpartikelschaumstoff bestehender Formkörper 3 mit einer aus Fig. 1 und 2 ersichtlichen Konfiguration eingesetzt. Der Sonnenblendenkörper 1 und der Formkörper 3 werden jeweils hergestellt, indem man in einen Hohlraum einer nicht gezeigten Form eine Füllung aus Polypropylenpartikeln (schwarze für den Sonnenblendenkörper 1, weiße für den Formkörper 3) einbringt und durch Einleiten von Dampf oder Heizluft in die jeweilige Form die Partikel erhitzt, so daß sie erweichen, sich ausdehnen und miteinander verschweißen.

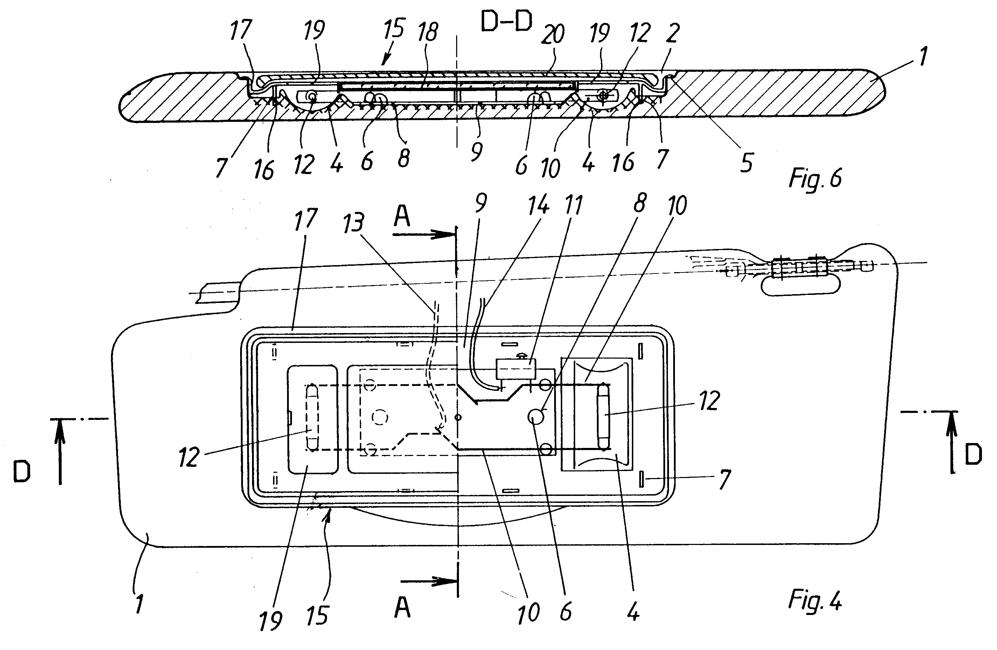

Bei der neuen Sonnenblende ist nun vorgesehen, den Formkörper 3 in die Vertiefung 2 des Sonnenblendenkörpers 1 einzulegen und innerhalb der Vertiefung 2 durch gleichzeitige Anwendung von Wärme und Druck gegen den Boden der Vertiefung 2 zu pressen, dabei zu verdichten und zu einem Reflektor 4, wie er besonders deutlich aus den Fig. 3 und 6 ersichtlich ist, umzuformen. Das Verdichten und Umformen kann schnell und einfach mittels eines aufheizbaren Prägewerkzeugs (nicht gezeigt) durchgeführt werden. Durch den Prozeß des thermischen Verdichtens wird eine geschlossene unlösbare Einheit gebildet.

Es ist auch möglich, den Formkörper 3 in eine Form einzulegen, thermisch zu verdichten und umzuformen und erst später in die Vertiefung 2 des Sonnenblendenkörpers 1 einzupressen. Dabei kann auch eine Verschweißung zwischen dem Sonnenblendenkörper 1 und dem Reflektor 4, z. B. durch Spiegelschweißen vorgesehen sein.

Auch der Sonnenblendenkörper 1 kann eine thermische Verdichtung und Umformung erfahren, wobei sich z. B. eine stufenförmige Absetzung 5 am Randbereich der Vertiefung 2 zur formschlüssigen Aufnahme des Rahmens der Spiegelbaugruppe (vgl. Fig. 5 und 6) ausbilden läßt. Auch ist es möglich, den Sonnenblendenkörper 1 an der Oberflächenschicht zu plastifizieren, die sodann prägebearbeitet wird. Hierdurch läßt sich eine beliebig gestaltete Oberflächenstruktur erzielen und damit eine separate Umhüllung des Sonnenblendenkörpers 1 mit Umhüllungsmaterial einsparen.

Beim thermischen Verdichten und Umformen des Formkörpers 3 erhält dieser zugleich angeformte Zapfen oder Dome 6 sowie Schlitzöffnungen 7. Die Dorne 6 dienen zur Halterung einer mit entsprechenden Öffnungen 8 versehenen Leiterplatte 9, die mit Beleuchtungseinrichtungs-Elementen, mit Kontaktbändern 10, Mikroschalter 11 und Soffitte 12 bestückt ist. Mit den elektrischen Kontaktelementen 10, 11 sind elektrische Leiter 13, 14 verbunden, über die in an sich bekannter Weise die elektrische Stromversorgung von der allgemeinen Fahrzeugelektrik her erfolgt.

Die im Reflektor 4 ausgebildeten Schlitzöffnungen 7 dienen zum Durchlaß von an der Spiegelbaugruppe 15 sitzenden Befestigungszapfen 16, die in den Sonnenblendenkörper 1 eingreifen und hier verschweißt sind, vornehmlich durch Spiegelschweißen. Die Spiegelbaugruppe 15 weißt einen sich auf den Rand oder auf die stufenförmige Absetzung 5 der Vertiefung 2 abstützenden Rahmen 17 auf, der einen Spiegel 18, Leuchtfenster 19 und eine Abdeckklappe 20 trägt. Da die Spiegelbaugruppe 15 nur zerstörend demontierbar wäre, sind die Leuchtfenster zwecks etwaigem Soffittwechsel aufklappbar an der Spiegelbaueinheit 15 angeordnet.

## Patentansprüche

1. Sonnenblende für Fahrzeuge mit einem als etwa rechteckige Platte ausgebildeten Sonnenblendenkörper (1) aus dunkelfarbenen, wie schwarzen Polypropylenpartikelschaumstoff und mit einer Vertiefung (2) in einer Hauptfläche des Sonnenblendenkörpers (1) zur Aufnahme eines Reflektors (4) und einer darüber angeordneten Spiegelbaugruppe (1) nebst Beleuchtungseinrichtung, dadurch gekennzeichnet, daß der Reflektor (4) aus einem thermisch verdichteten, hellfarbenen, vorzugsweise weißen Polypropylenpartikelschaumkörper gebildet und mit dem Sonnenblendenkörper (1) innerhalb der Vertiefung (2) verpreßt ist.

2. Sonnenblende nach Anspruch 1, dadurch gekennzeichnet, daß der Reflektor (4) mit dem Sonnenblendenkörper (1) innerhalb der Vertiefung (2) verpreßt und verschweißt ist.

3. Sonnenblende nach Anspruch 1 oder 2, dadurch gekennzeichnet, daß der Reflektor (4) vorderseitig angeformte Zapfen oder Dorne (6) zur Halterung einer mit entsprechenden Öffnungen (8) versehenen Leiterplatte (9), die mit Beleuchtungseinrichtungs-Elementen, wie Kontaktbänder (10), Mikroschalter (11) und Soffitten (12) bestückt ist, aufweist.

4. Sonnenblende nach wenigstens einem der Ansprüche 1 bis 3, dadurch gekennzeichnet, daß der Reflektor (4) mit Öffnungen (7) zum Durchlaß von an der Spiegelbaugruppe (15) sitzenden Befestigungszapfen (16), die in den Sonnenblendenkörper (1) eingreifen, ausgebildet ist, wobei die den Reflektor (4) und die Leiterplatte (9) übergreifende Spiegelbaugruppe (15) einen sich auf den Rand der Vertiefung (2) abstützenden Rahmen (17) aufweist, der einen Spiegel (18), Leuchtfenster (19) und ggf. eine Abdeckklappe (20) zum Abdecken des Spiegels (18) trägt.

5. Sonnenblende nach wenigstens einem der Ansprüche 1 bis 4, dadurch gekennzeichnet, daß die zur Spiegelbaugruppe (15) gehörende Befestigungszapfen (16) mit dem Sonnenblendenkörper (1) verschweißt sind.

6. Verfahren zum Herstellen einer Sonnenblende nach einem der Ansprüche 1 bis 5, wobei in eine Schäumform dunkelfarbene Polypropylenpartikel eingegeben und zu einem mit einer Vertiefung (2) in einer Hauptfläche ausgebildeten Sonnenblendenkörper (1) geformt werden, dadurch gekennzeichnet, daß in eine zweite Schäumform hellfarbene Polypropylenpartikel eingegeben und zu einem in die Vertiefung (2) des Sonnenblendenkörpers (1) passenden Formkörper (3) geformt werden, daß der hellfarbene Formkörper (3) in die Vertiefung (2) des Sonnenblendenkörpers (1) eingesetzt wird und daß hiernach der hellfarbene Formkörper (3) durch gleichzeitige Anwendung von Wärme und Druck gegen den Boden der Vertiefung (2) gepreßt, dabei verdichtet und zu einem Reflektor (4) umgeformt wird.

7. Verfahren nach Anspruch 6, dadurch gekennzeichnet, daß der hellfarbene Formkörper (3) mittels eines aufheizbaren Prägewerkzeugs verdichtet und umgeformt wird.

8. Verfahren nach Anspruch 6 oder 7, dadurch gekennzeichnet, daß auch der Sonnenblendenkörper (1) durch gleichzeitige Anwendung von Wärme und Druck zumindest bereichsweise verdichtet und umgeformt wird.

9. Verfahren nach wenigstens einem der Ansprüche 6 bis 8, dadurch gekennzeichnet, daß die Oberflächenschicht des Sonnenblendenkörpers (1) plastifiziert und prägebearbeitet wird.

## Claims

1. A sun visor for vehicles comprising a sun visor body (1) formed approximately like a rectangular plate of dark colored, for instance black polypropylene particle foam and with a depression (2) on a main surface of the sun visor body (1), for fitting a reflector (4) and a mirror arrangement (1) above the reflector and an illumination device, **characterized in that** the reflector (4) is a heat compressed bright, preferably white polypropilene particle foam body which is pressed with the sun visor body (1) inside the depression (2).

2. A sun visor according to claim 1**, characterized in that** the reflector (4) is pressed and fused with the sun visor body (1) inside the depression (2).

3. A sun visor according to claim 1 or 2, **characterized in that** the reflector (4) comprises on the front side bolts or pins (6) for securing a circuit board (9) with respective openings (8), the circuit board being provided with illumination elements, like contacting strips (10), microswitches (11) and tubular lamps (12).

4. A sun visor according to at least one of the claims 1 to 3, **characterized in that** the reflector (4) is formed with openings (7) for the passage of holding pins (16), which are disposed on the mirror arrangement (15) and engage in the sun visor body (1), the mirror arrangement (15) located above the reflector (4) and the circuit board (9) being provided with a frame (17) supported on the edge of the depression (2), the frame supporting a mirror (18), an illumination window (19) and if necessary a covering lid (20) for covering the mirror (18).

5. A sun visor according to at least one of the claims 1 to 4, **characterized in that** the holding pins (16) of the mirror arrangement (15) are fused with the sun visor body (1).

6. A method for producing a sun visor according to one of the claims 1 to 5, in which dark colored polypropilene particles are introduced in a foam mould and are formed to a sun visor body (1) provided with a depression (2) in one of the main surfaces, **characterized in that** in a second foam mould are introduced bright colored polypropilene particles which are formed to a form body (3) adapted to the depression (2) of the sun visor body (1), the bright colored form body (3) is introduced in the depression (2) of the sun visor body (1) and then the bright colored form body (3) is pressed by simultaneous heating and compression towards the bottom of the depression (2), whereby it is compressed and deformed in order to form a reflector (4).

7. A method according to claim 6, **characterized in that** the bright colored form body (3) is compressed and deformed by means of a heated embossing tool.

8. A method according to claim 6 or 7, **characterized in that** also the sun visor body (1) is compressed and deformed at least over some areas by simultaneous heating and compression.

9. A method according to at least one of the claims 6 to 8, **characterized in that** the surface layer of the sun visor body (1) is plasticized and embossed.

## Revendications

1. Pare-soleil pour véhicules comportant un corps (1) du pare-soleil sensiblement en forme de plaque rectangulaire et essentiellement de couleur sombre, par exemple noire, en mousse à particules de polypropylène, et un creux (2), ménagé dans une surface principale du corps (1) du pare-soleil, pour recevoir un réflecteur (4), et un groupe de construction (15) pour miroir disposé au-dessus et prévoyant un dispositif d'éclairage, caractérisé en ce que le réflecteur (4) est formé d'un corps en mousse à particules de polypropylène épaissi par la chaleur, de couleur claire, de préférence blanche, et est comprimé entre le creux (2) et le corps (1) du pare-soleil.

2. Pare-soleil selon la revendication 1, caractérisé en ce que le réflecteur (4) est comprimé et soudé dans le creux (2) avec le corps (1) du pare-soleil.

3. Pare-soleil selon la revendication 1 au 2, caractérisé en ce que le réflecteur (4) présente, à son côté avant, des goujons ou chevilles (6) conformés sur le réflecteur lui-même, pour la retenue d'un circuit imprimé (9) muni d'ouvertures correspondantes (8) et équipé d'éléments du dispositif d'éclairage, tels que bandes de contact (10), microinterrupteur (11) et ampoules à filament rectiligne (12).

4. Pare-soleil selon l'une au moins des revendications 1 à 3, caractérisé en ce que le réflecteur (4) est conformé de manière a avoir des ouvertures (7) pour le passage de goujons de fixation (16), lesquels résident sur le groupe de construction (15) pour le miroir et s'engagent dans le corps (1) du pare-soleil, le groupe de construction (15) pour le miroir engageant a sa partie supérieure le réflecteur (4), et le circuit imprimé (7) présentant un cadre (17) lequel est supporté sur le bord du creux (2) et porte un miroir (18), une fenêtre d'éclairage (19) et éventuellement un couvercle relevable destiné à couvrir le miroir (18).

5. Pare-soleil selon l'une au mains des revendications 1 à 4, caractérisé en ce que les goujons de fixation (16) appartenant au groupe de construction (15) pour le miroir sont soudés au corps (1) du pare-soleil.

6. Procédé pour la fabrication d'un pare-soleil selon l'une des revendications 1 à 5, des particules de couleur sombre en polypropylène étant introduites dans un moule et moulées de manière a créer un corps (1) du pare-soleil conformé de manière à prévoir un creux (2) dans sa surface principale, caractérisé en ce que des particules de couleur claire en polypropylène sont introduites dans un deuxième moule et moulées de manière à créer un corps moule (3) adapté a être introduit dans le creux (2) du corps (1) du pare-soleil, que le corps moule (2) de couleur claire est inséré dans le creux (2) du corps (1) du pare-soleil et qu'après cela le corps moule (3) de couleur claire est comprimé contre le fond du creux (2) par l'utilisation simultanée de chaleur et pression, lors de cette opération étant épaissi et déformé à former un réflecteur (4).

7. Procédé selon la revendication 6, caractérisé en ce que le corps moule (3) de couleur claire est épaissi et déformé par un outil à imprimer susceptible d'être chauffé.

8. Procédé selon la revendication 6 ou 7, caractérisé en ce qu'également le corps (1) du pare-soleil est épaissi et déformé au moins par zones, par l'utilisation simultanée de chaleur et pression.

9. Procédé selon l'une au mains des revendications 6 à 8, caractérisé en ce que la couche superficielle du corps (1) du pare-soleil est plastifiée et façonnée par estampage.
